# EUROPEAN PATENT APPLICATION

(11) **EP 2 818 737 A1**
(43) Date of publication of application: **31.12.2014**
(21) Application number: 12869424.7
(22) Date of filing: 24.02.2012
(51) Int. Cl.: F16C 11/04

(54) **HINGE AND ELECTRICAL APPLIANCE**

(71) Applicant: Fujitsu Limited, Kawasaki-shi, Kanagawa 211-8588 (JP)
(72) Inventor: HORINISHI, Takayuki, Kawasaki-shi Kanagawa 211-8588 (JP); BANDO, Makoto, Kawasaki-shi Kanagawa 211-8588 (JP); FUJIKAWA, Hideyuki, Kawasaki-shi Kanagawa 211-8588 (JP); ISHIKAWA, Masaki, Kawasaki-shi Kanagawa 211-8588 (JP)
(74) Representative: Schultes, Stephan
(86) International application number: PCT/JP2012/054643
(87) International publication number: WO 2013/125042

(57) **Abstract**

An object is to improve convenience of use of an electronic device.A hinge (10) has a first stopper (100) and a second stopper (110). The first stopper (100) permits swinging of a first swinging member (60) in one direction from a neutral position in a swinging range of the first swinging member (60), and restricts swinging of the first swinging member (60) in another direction from the neutral position in the swinging range of the first swinging member (60). When second swinging members (70) are positioned at neutral positions in a swinging range of the second swinging members (70), the second stopper (110) permits swinging of the first swinging member (60) in one direction from the neutral position in the swinging range of the first swinging member (60).

## Description

### Technical Field

The technique disclosed in the present application relates to a hinge and an electronic device.

### Background Art

Conventionally, there are electronic devices having an electronic device main body that has a display portion, a stand that is provided at the rear surface side of this electronic device main body, and a sliding mechanism that connects this electronic device main body and the stand. In this electronic device, by sliding the electronic device main body by the sliding mechanism with respect to the stand, this electronic device main body can be used while tilted.

### Prior Art Documents

### Patent Documents

Non-Patent Document 1: Hewlett-Packard Japan, Ltd., 610 PC summer model 2011 design, [online], [searched on January 5, 2012], internet <URL: http://www.shopping.hp.com/webapp/shopping/computer_series.do?storeName=computer_st ore&category=desktops&series_name=610xt_series&a1=See+all&v1=series>
Non-Patent Document 2: Hewlett-Packard Japan, Ltd., 610 PC summer model 2011 design, [online], [searched on January 5, 2012], internet <URL: http://www.hp.com/united-states/campaigns/touchsmart/#/TouchSmart-610>

### SUMMARY OF INVENTION

### Technical Problem

However, in this type of electronic device, there are cases in which a hinge is used in connecting the electronic device main body and the stand. Further, in this case as well, it is desirable to improve the convenience of use of the electronic device.

The object in one aspect of the technique disclosed in the present application is the improvement of the convenience of use of an electronic device.

### Solution to Problem

In order to achieve the above-described object, in accordance with the technique disclosed in the present application, there is provided a hinge that has a base member, a first swinging member, second swinging members, a first stopper and a second stopper. The first swinging member is supported at the base member swingably via first rotating shafts. The second swinging members are supported swingably at the first swinging member via second rotating shafts whose axial directions intersect axial directions of the first rotating shafts.

The first stopper has an abutted portion provided at the base member, and an abutting portion provided at the first swinging member. The abutting portion permits swinging of the first swinging member in one direction from a neutral position in the swinging range of the first swinging member. On the other hand, due to the abutting portion being made to abut the abutted portion, the abutting portion restricts swinging of the first swinging member in the other direction from the neutral position in the swinging range of the first swinging member.

When the second swinging members are positioned at neutral positions in a swinging range of the second swinging members, the second stopper permits swinging of the first swinging member in one direction from the neutral position in the swinging range of the first swinging member.

### Advantageous Effects of Invention

In accordance with the technique disclosed in the present application, convenience of use of an electronic device can be improved.

### BRIEF DESCRIPTION OF DRAWINGS

Fig. 1A is a perspective view in which an electronic device, that is set in a standard viewer style, is viewed from the front surface side.
Fig. 1B is a perspective view in which the electronic device of Fig. 1A is viewed from the rear surface side.
Fig. 1C is a side view that includes a partial vertical cross-section of the electronic device of Fig. 1A and Fig. 1B.
Fig. 1D is an enlarged view of main portions of Fig. 1C.
Fig. 2 is a perspective view illustrating a state in which the electronic device, that is set in the standard viewer style, is laid down on a setting surface.
Fig. 3A is a perspective view of the electronic device that is set in a touch style.
Fig. 3B is a side view that includes a partial vertical cross-section of the electronic device of Fig. 3A.
Fig. 3C is an enlarged view of main portions of Fig. 3B.
Fig. 4A is a perspective view of the electronic device that is set in a flat style.
Fig. 4B is a side view that includes a partial lateral cross-section of the electronic device of Fig. 4A.
Fig. 4C is an enlarged view of main portions of Fig. 4B.
Fig. 5A is a perspective view illustrating a state in which the electronic device, that is set in a multiviewer style, is laid down on a setting surface.
Fig. 5B is a front view that includes a partial lateral cross-section of the electronic device of Fig. 5A.
Fig. 5C is an enlarged view of main portions of Fig. 5B.
Fig. 6A is a perspective view in which the electronic device, that is set in the multiviewer style, is viewed from the front surface side.
Fig. 6B is a perspective view in which the electronic device, that is set in the multiviewer style, is viewed from the rear surface side.
Fig. 7A is a perspective view illustrating a hinge at the time when the electronic device is set in the standard viewer style.
Fig. 7B is a perspective view in which the hinge of Fig. 7A is viewed from a different angle. Fig. 8A is a perspective view illustrating the hinge at the time when the electronic device is set in the flat style.
Fig. 8B is a perspective view in which the hinge of Fig. 8A is viewed from a different angle. Fig. 9A is a perspective view illustrating the hinge at the time when the electronic device is set in the multiviewer style.
Fig. 9B is a perspective view in which the hinge of Fig. 9A is viewed from a different angle.

### DESCRIPTION OF EMBODIMENTS

An embodiment of the technique disclosed in the present application is described hereinafter with reference to the drawings.

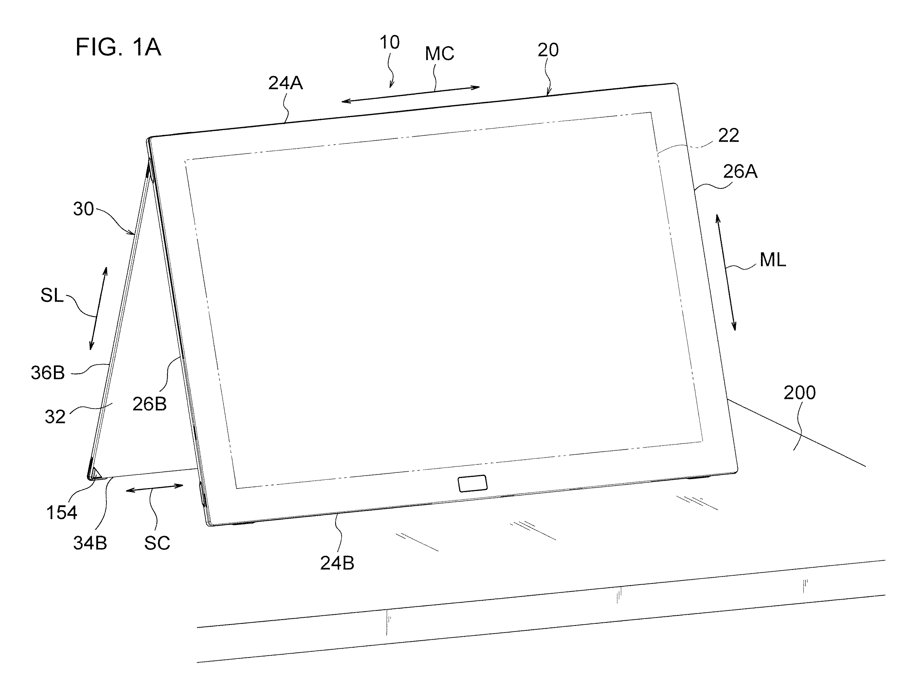

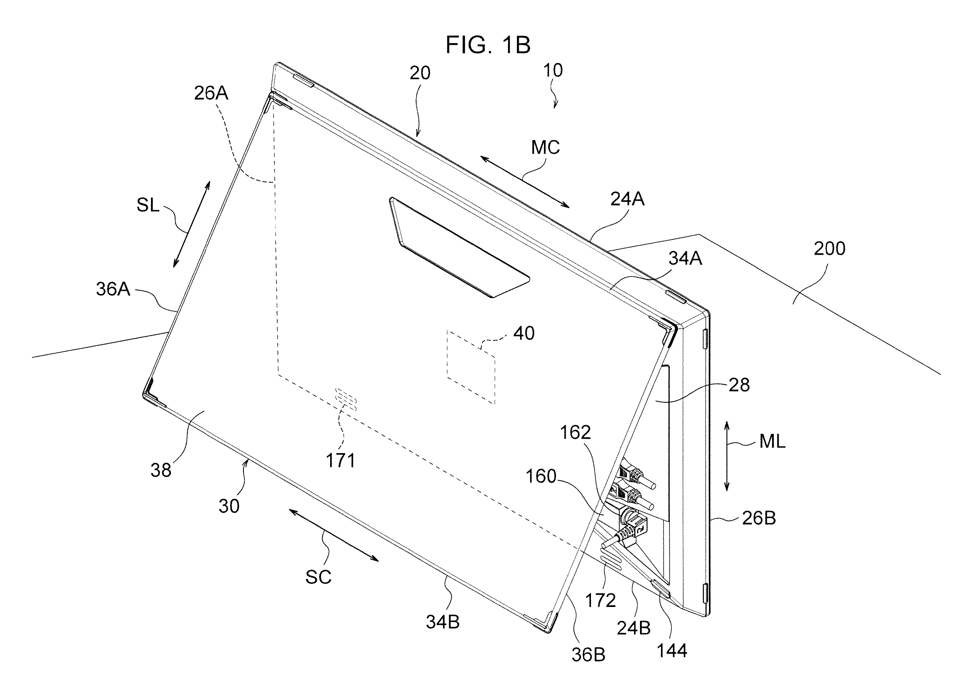

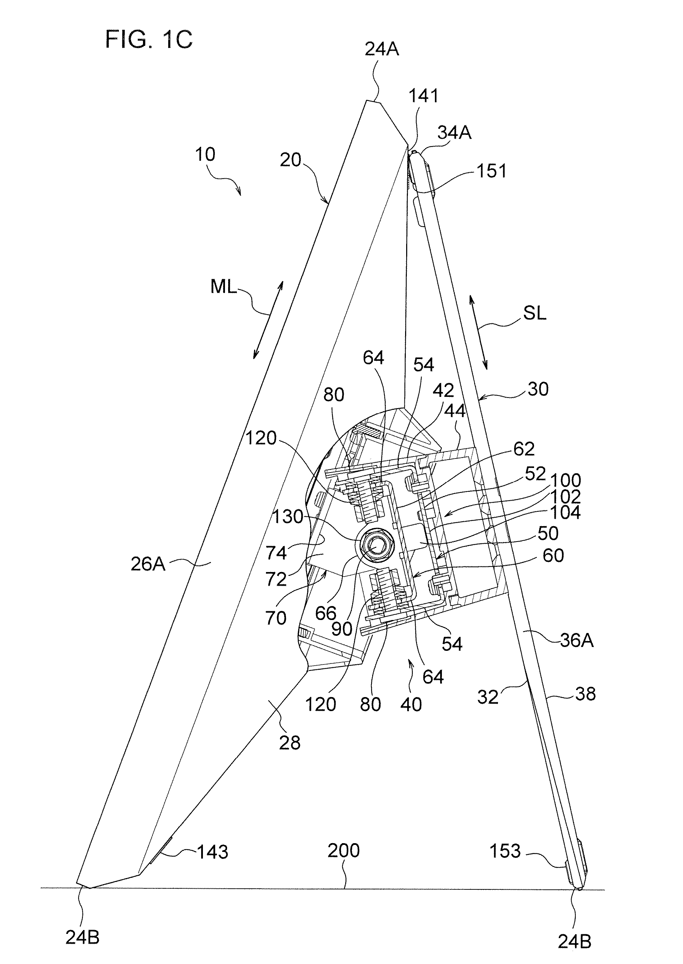

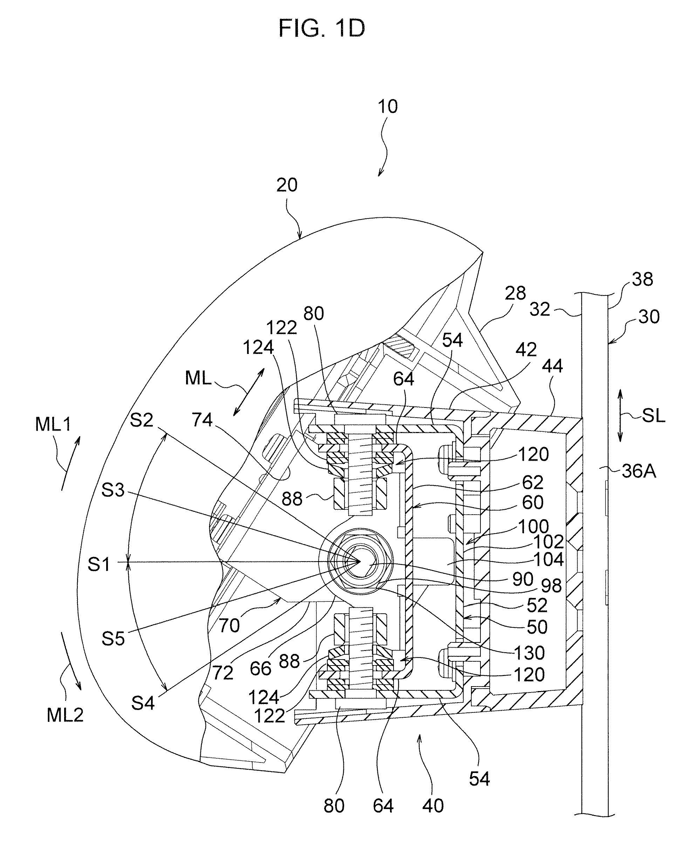

As illustrated in Fig. 1 through Fig. 6, an electronic device 10 relating to an embodiment of the technique disclosed in the present application has an electronic device main body portion 20, a stand 30 and a hinge 40.

The electronic device main body portion 20 has a screen display portion 22, such as a liquid crystal display or the like for example, at the front surface portion thereof. This screen display portion 22 displays a screen, and input of information by touch operation thereat is possible. An unillustrated control board, that controls the screen display portion 22, and the like are accommodated at the interior of this electronic device main body portion 20.

This electronic device main body portion 20 is formed in a rectangular shape as seen in front view, and has a pair of lateral edge portions 24A, 24B and a pair of vertical edge portions 26A, 26B. The pair of lateral edge portions 24A, 24B extend in the lateral direction of the electronic device main body portion 20, and the pair of vertical edge portions 26A, 26B extend in the vertical direction of the electronic device main body portion 20.

In the respective drawings, arrows MC, ML respectively indicate the lateral direction and the vertical direction of this electronic device main body portion 20. The pair of vertical edge portions 26A, 26B connect the both ends of the pair of lateral edge portions 24A, 24B, and are formed to be shorter than these lateral edge portions 24A, 24B.

The stand 30 is provided at the rear surface side of the electronic device main body portion 20. This stand 30 is formed by a rectangular flat plate that has substantially the same size and shape as the electronic device main body portion 20 as seen in plan view. This stand 30 has a pair of lateral edge portions 34A, 34B and a pair of vertical edge portions 36A, 36B. The pair of lateral edge portions 34A, 34B extend in the lateral direction of the stand 30, and the pair of vertical edge portions 36A, 36B extend in the vertical direction of the stand 30.

In the respective drawings, arrows SC, SL respectively indicate the lateral direction and the vertical direction of this stand 30. This stand 30 is mounted to the electronic device main body portion 20 via the hinge 40 that is described later. The pair of lateral edge portions 34A, 34B extend along the lateral edge portions 24A, 24B of the electronic device main body portion 20. Further, the pair of vertical edge portions 36A, 36B connect the both ends of the pair of lateral edge portions 34A, 34B, and are formed to be shorter than these lateral edge portions 34A, 34B.

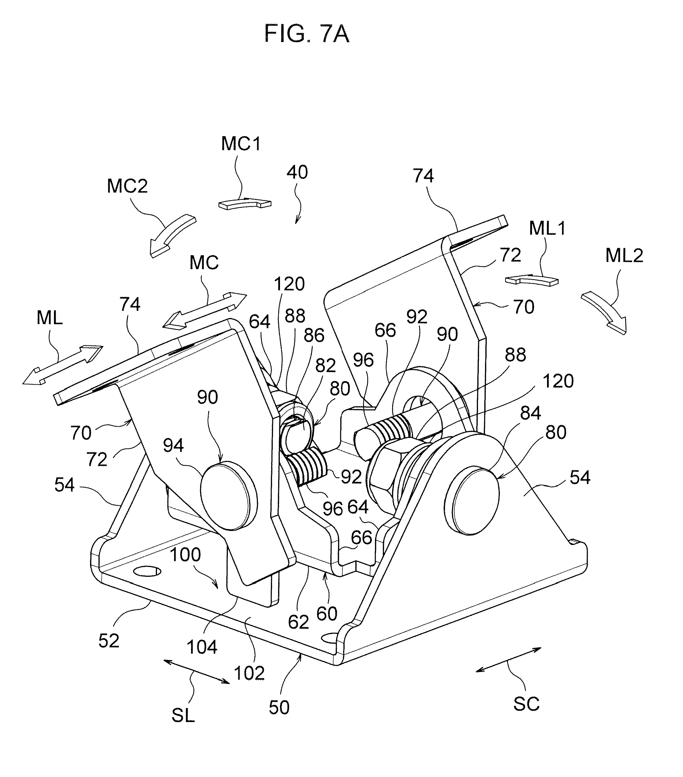

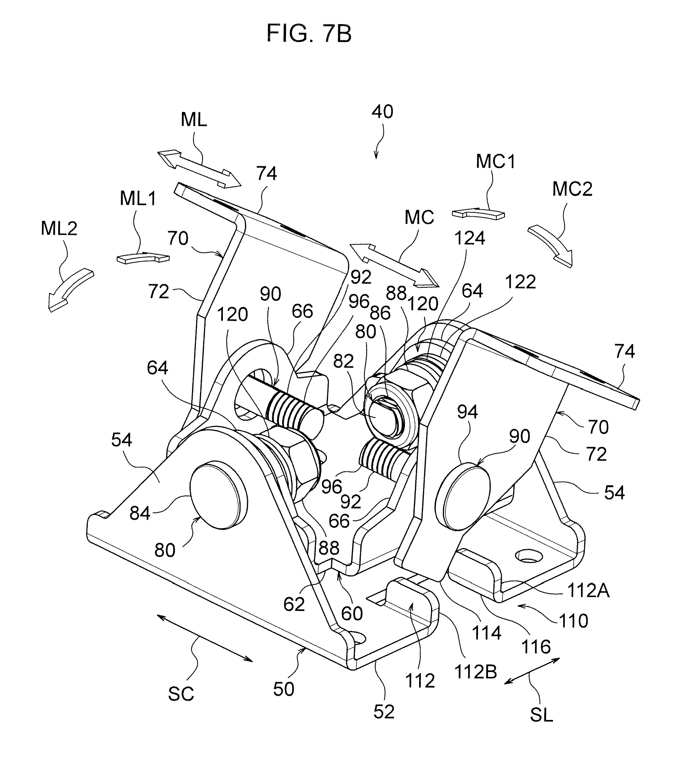

The hinge 40 supports the stand 30 with respect to the above-described electronic device main body portion 20. As illustrated in Fig. 7 through Fig. 9, this hinge 40 has a base member 50, a first swinging member 60, a pair of second swinging members 70, a pair of first rotating shafts 80, and a pair of second rotating shafts 90.

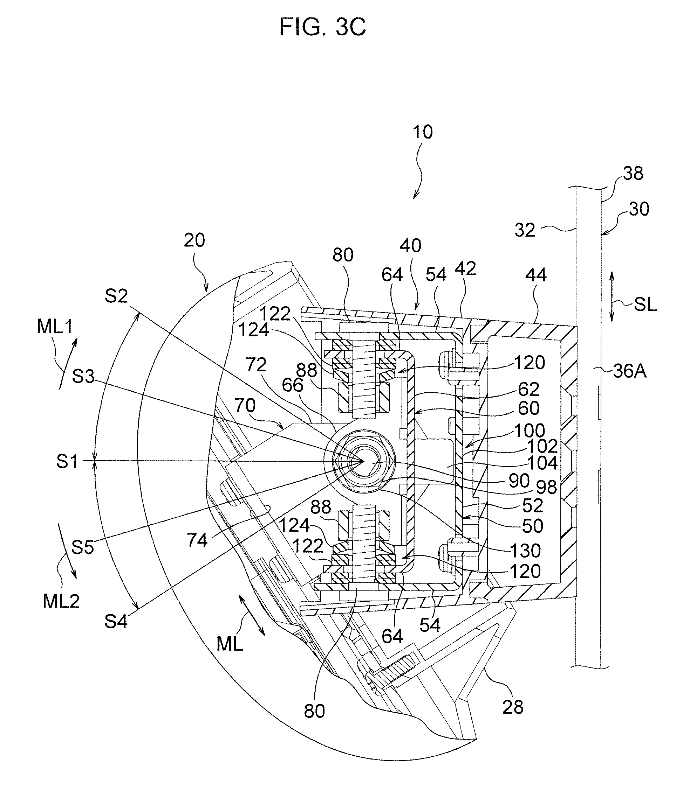

The base member 50 has a main body portion 52 that is flat plate shaped. The main body portion 52 extends in the lateral direction and the vertical direction (the arrow SC direction and the arrow SL direction) of the above-described stand 30. As illustrated in Fig. 1D and Fig. 3C, this main body portion 52 is fixed via a cover member 42 and a bracket 44 to the central portion of the stand 30. Supporting wall portions 54, that extend toward the side opposite the stand 30, i.e., toward the electronic device main body portion 20 side, are respectively formed at the both end portions, in the vertical direction (the arrow SL direction) of the stand 30, at this main body portion 52. The respective supporting wall portions 54 are formed with the vertical direction of the stand 30 being the thickness directions thereof.

The first swinging member 60 is disposed at the electronic device main body portion 20 side with respect to the main body portion 52, and between the pair of supporting wall portions 54, 54. This first swinging member 60 has a main body portion 62 that is flat plate shaped. Supporting wall portions 64, that extend toward the same side as the supporting wall portions 54 formed at the base member 50, i.e., toward the electronic device main body portion 20 side, are respectively formed at the both end portions, in the vertical direction of the stand 30, at this main body portion 62. The respective supporting wall portions 64 are formed with the vertical direction of the stand 30 being the thickness directions thereof, and respectively overlap the supporting wall portions 54.

The pair of first rotating shafts 80 are disposed with the thickness directions of the supporting wall portions 54, 64 being the axial directions thereof respectively. Namely, this pair of first rotating shafts 80 is disposed with the vertical direction of the stand 30 being the axial directions thereof. As illustrated in Fig. 7 through Fig. 9, this pair of first rotating shafts 80 each have a shaft portion 82 that passes-through the supporting wall portions 54, 64, and a head portion 84 that is formed at the proximal end portion of this shaft portion 82. A screw portion 86 is formed at the distal end portion of the shaft portion 82, and a nut 88 is screwed-together with this screw portion 86.

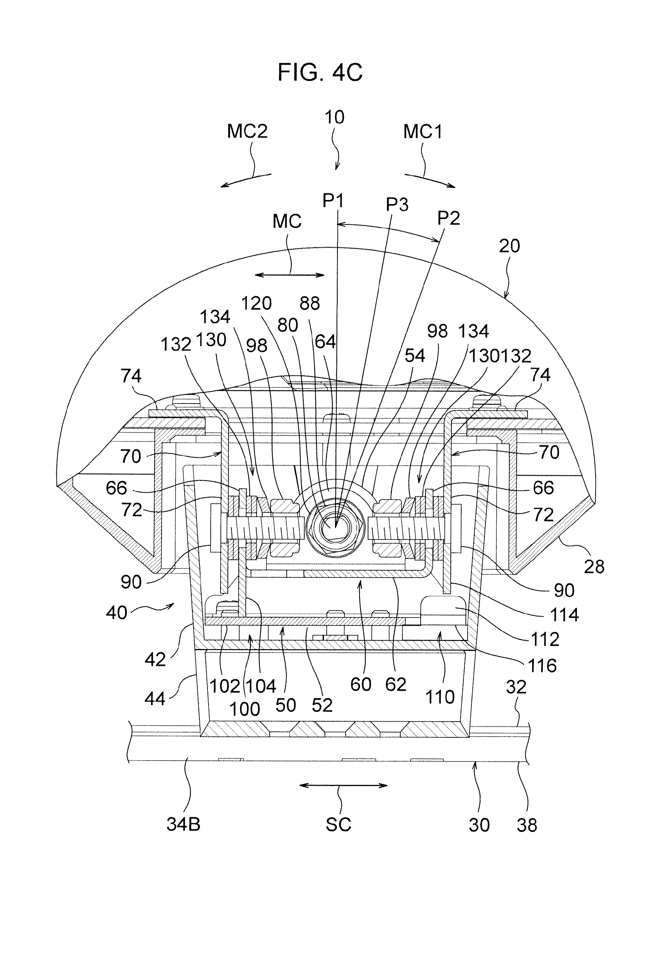

Further, the above-described first swinging member 60 is swingably supported at the base member 50 via this pair of first rotating shafts 80. Further, supporting wall portions 66, that extend toward the same side as the supporting wall portions 64, are respectively formed at the both end portions, in the lateral direction (the arrow MC direction) of the electronic device main body portion 20, at the main body portion 62 of this first swinging member 60. The respective supporting wall portions 66 are formed with the lateral direction of the electronic device main body portion 20 being the thickness directions thereof (see Fig. 4C as well).

The pair of second swinging members 70 are formed the same as one another. Each of the second swinging members 70 has a main body portion 72 that is flat plate shaped and whose plate thickness direction is the lateral direction of the electronic device main body portion 20. This main body portion 72 overlaps the supporting wall portion 66.

The pair of second rotating shafts 90 are disposed with the axial directions thereof intersecting those of the first rotating shafts 80, and are disposed with the thickness directions of the main body portions 72 and the supporting wall portions 66 being the axial directions thereof respectively. Namely, this pair of second rotating shafts 90 are disposed with the lateral direction (the direction of arrow MC) of the electronic device main body portion 20 being the axial directions thereof.

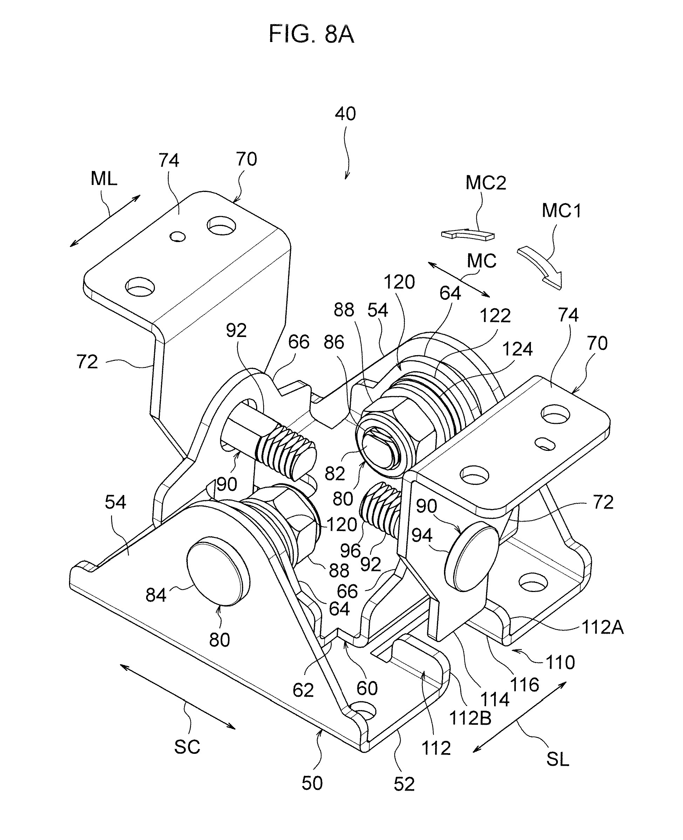

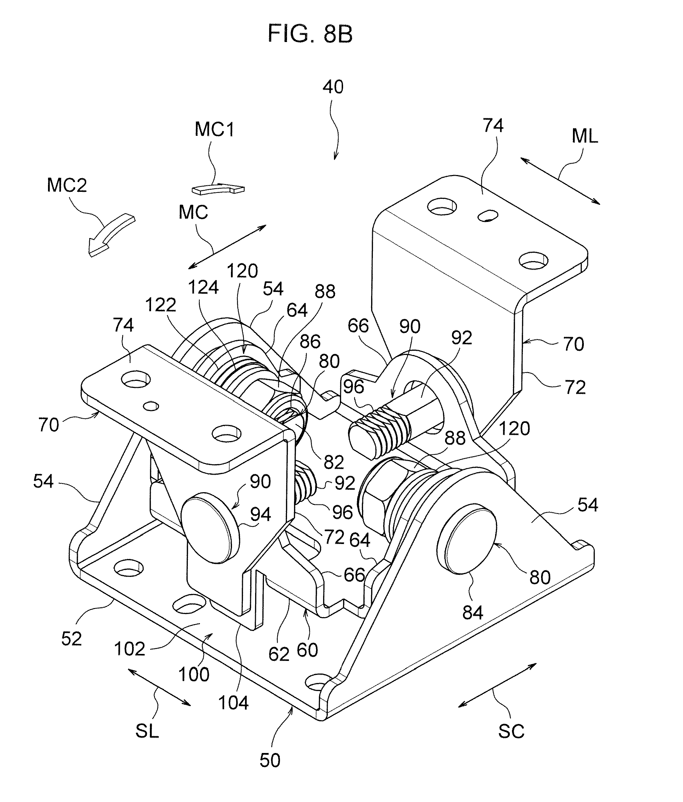

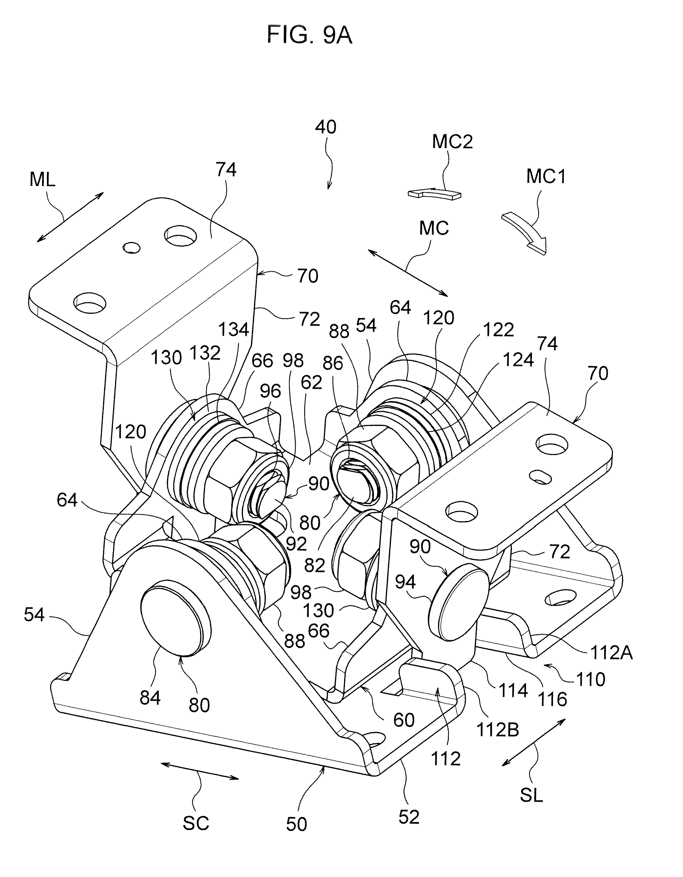

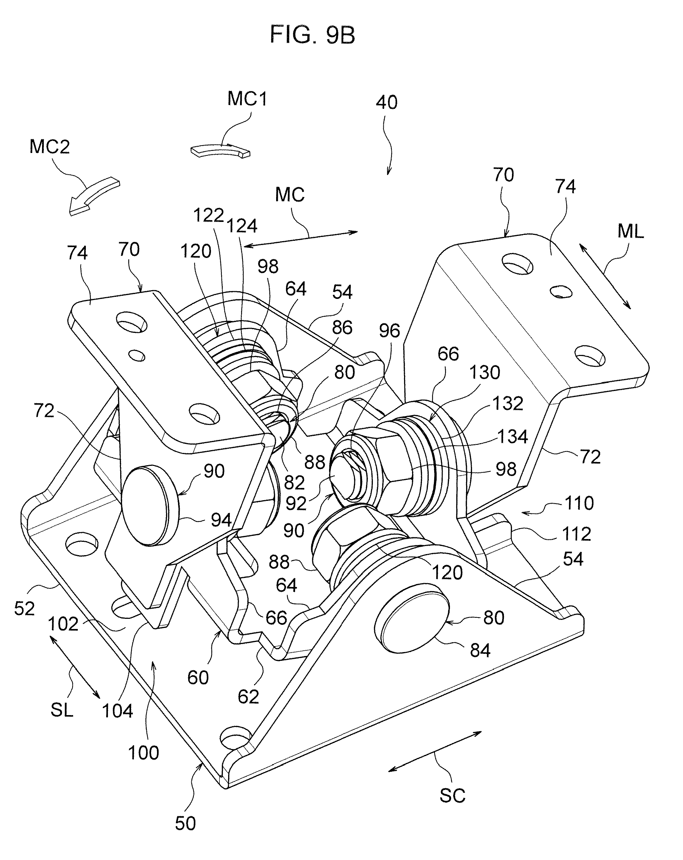

Further, this pair of second rotating shafts 90 are disposed on the same plane as the pair of first rotating shafts 80. Namely, the height from the main body portion 62 to the pair of second rotating shafts 90 is set to be the same as the height from the main body portion 62 to the first rotating shafts 80. This pair of second rotating shafts 90 each has a shaft portion 92 that passes-through the main body portion 72 and the supporting wall portion 66, and a head portion 94 that is formed at the proximal end portion of this shaft portion 92. A screw 96 is formed at the distal end portion of the shaft portion 92, and a nut 98 is screwed-together with this screw portion 96 (see Fig. 9). Note that, in Fig. 7 and Fig. 8, the nuts 98 are omitted for ease of understanding.

Further, the above-described respectively second swinging members 70 are swingably supported at the supporting wall portions 66 of the first swinging member 60 via these second rotating shafts 90. Further, fixing portions 74 are respectively formed at the end portions, at the sides opposite the second rotating shafts 90, of these second swinging members 70 respectively.

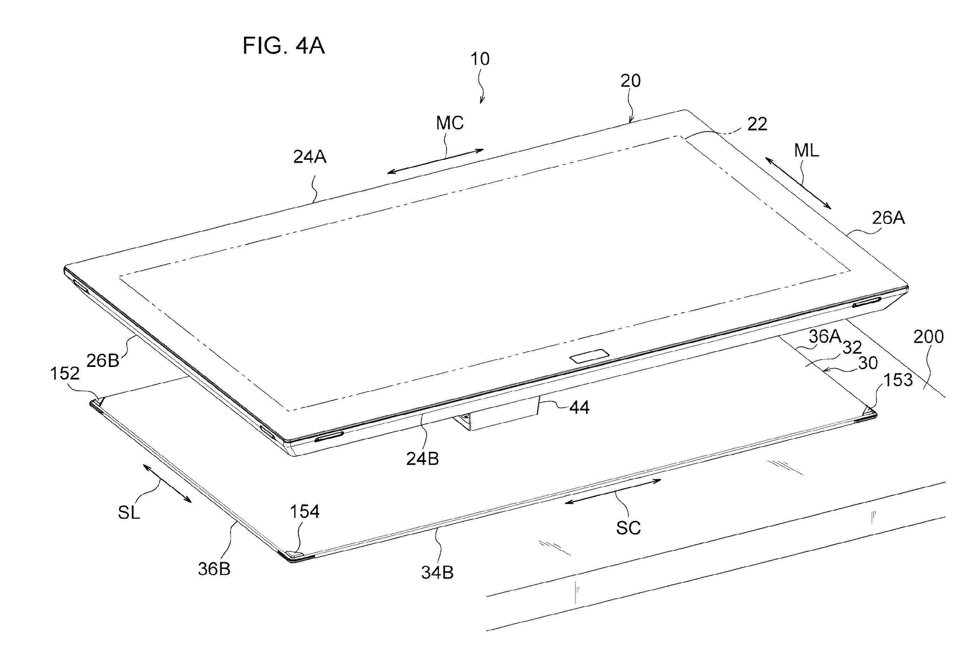

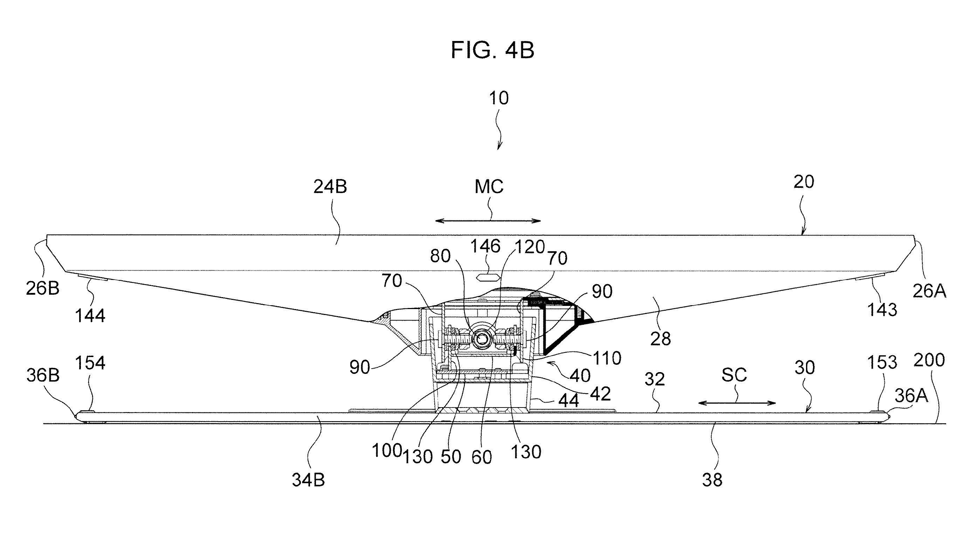

As illustrated in Fig. 4, the one fixing portion 74 extends toward one side in the lateral direction at the electronic device main body portion 20, and the other fixing portion 74 extends toward the other side in the lateral direction at the electronic device main body portion 20. Further, this pair of fixing portions 74, 74 are fixed to the central portion of a rear surface portion 28 of the electronic device main body portion 20. Note that this pair of fixing portions 74, 74 are, more concretely, fixed to mounting portions of a back cover that forms the rear surface portion 28 of the electronic device main body portion 20.

Further, a first stopper 100 and a second stopper 110 are provided at this hinge 40.

As illustrated in Fig. 7 through Fig. 9, the first stopper 100 has an abutted portion 102 that is provided at the base member 50, and an abutting portion 104 that is provided at the first swinging member 60. The abutted portion 102 is formed by a portion of the main body portion 52 of the base member 50, and more concretely, is formed by a region of this main body portion 52, which region is at the side of the other vertical edge portion 36B of the above-described stand 30 (see Fig. 4B and Fig. 4C). On the other hand, the abutting portion 104 is formed by a portion of the main body portion 62 at the first swinging member 60 being cut and made to stand erect, and projects-out toward the main body portion 52 from a region at the main body portion 62 which region faces the abutted portion 102.

Further, as illustrated in Fig. 9B, when the first swinging member 60 is swung in one direction, i.e., in the arrow MC1 direction, from a neutral position in the swinging range thereof, the abutting portion 104 moves apart from the abutted portion 102, and swinging of the first swinging member 60 in the arrow MC1 direction is permitted.

On other other hand, as illustrated in Fig. 8B, when the first swinging member 60 is positioned at the neutral position in the swinging range thereof, due to the abutting portion 104 being made to abut the abutted portion 102, swinging of the first swinging member 60 in the other direction, i.e., in the arrow MC2 direction, is restricted. Namely, the projecting length of this abutting portion 104 from the main body portion 62 is set such that the abutting portion 104 is made to abut the abutted portion 102 when the first swinging member 60 is at the neutral position in the swinging range thereof.

Note that, if the abutting portion 104 were to be omitted from the first swinging member 60, the first swinging member 60 could swing in the arrow MC2 direction from the neutral position. However, the abutting portion 104 is formed at the first swinging member 60, and, due to this abutting portion 104 being made to abut the abutted portion 102, swinging of the first swinging member 60 in the arrow MC2 direction from the neutral position is restricted.

The second stopper 110 has a guide portion 112 that is provided at the base member 50, and an interference portion 114 that is provided at the second swinging member 70. The guide portion 112 is formed at a region of the main body portion 52 of the base member 50, which region is at the side opposite the above-described first stopper 100. This guide portion 112 has a pair of bent pieces 112A, 112B that are cut and made to stand erect so as to extend toward the side opposite the stand 30. This pair of bent pieces 112A, 112B oppose one another in a state of being separated from one another in the vertical direction (the direction of arrow SL) of the stand 30. A cut-out 116 is formed between this pair of bent pieces 112A, 112B.

The interference portion 114 is formed at, among the pair of second swinging members 70, the second swinging member 70 that is positioned at the side opposite the above-described first stopper 100. This interference portion 114 projects-out toward the main body portion 52 of the base member 50 from the end portion, at the second rotating shaft 90 side, of the this second swinging member 70. The width of the interference portion 114 in the vertical direction (the direction of arrow ML) of the electronic device main body portion 20 is set to be slightly smaller than the width between the pair of bent pieces 112A, 112B.

Further, as illustrated in Fig. 8A, when the second swinging members 70 are positioned at neutral positions in the swinging range thereof, the interference portion 114 is positioned between the distal end portions of the pair of bent pieces 112A, 112B. In this state, due to the interference portion 114 being guided by the pair of bent pieces 112A, 112B that form the guide portion 112, swinging of the first swinging member 60 in the arrow MC1 direction from the neutral position in the swinging range thereof is permitted.

Namely, the position, the shape, the dimensions and the like of the interference portion 114 are set such that the interference portion does not interfere with the pair of bent pieces 112A, 112B even in a case in which the first swinging member 60 is swung in the arrow MC1 direction when the second swinging members 70 are positioned at the neutral positions in the swinging range thereof.

On the other hand, as illustrated in Fig. 7B, when the second swinging members 70 are positioned at positions that are away from the neutral positions in the swinging range thereof, the interference portion 114 interferes with the guide portion 112. Further, due thereto, swinging of the first swinging member 60 in the arrow MC1 direction from the neutral position in the swinging range thereof is restricted.

Namely, when the second swinging members 70 are positioned at positions that are away from the neutral positions in the swinging range thereof, the interference portion 114 is moved toward the side of either of the pair of bent pieces 112A, 112B, and is made to approach this either of the pair of bent pieces 112A, 112B. Accordingly, even if, from this state, an attempt is made to swing the first swinging member 60 in the arrow MC1 direction, swinging of the first swinging member 60 in the arrow MC1 direction is restricted due to the interference portion 114 being made to interfere with the guide portion 112.

Further, this electronic device 10 can be set in the following plural usage modes due to the above-described hinge 40 mechanism.

Namely, as illustrated in Fig. 1 and Fig. 7, when the first swinging member 60 is positioned at the neutral position in the swinging range thereof and the second swinging members 70 are positioned at one swung positions that the second swinging members 70 are swung to in one direction (the arrow ML1 direction), the one lateral edge portions 24A, 34A are made to approach one another. Further, at this time, the other lateral edge portions 24B, 34B are moved away from one another. In this mode of use of the electronic device 10, the one lateral edge portions 24A, 34A are positioned at the vertical direction upper side, and the other lateral edge portions 24B, 34B are positioned at the vertical direction lower side. Further, the other lateral edge portions 24B, 34B are the setting portions onto a setting surface 200 such as a desk or the like for example.

In the present embodiment, this usage mode of the electronic device 10 is called the standard viewer style. This standard viewer style is an example of the first usage mode of the electronic device.

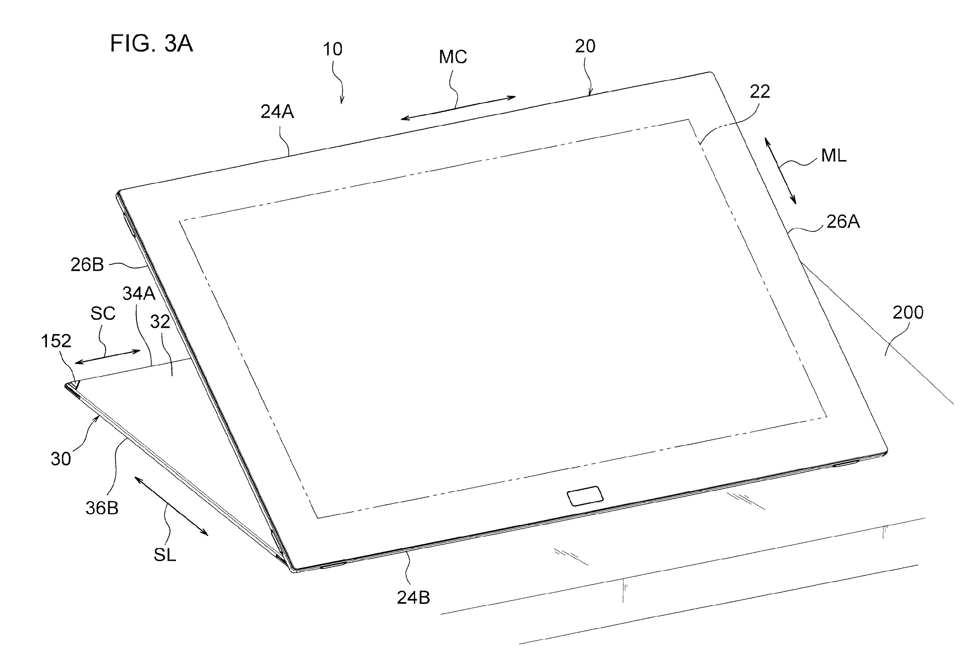

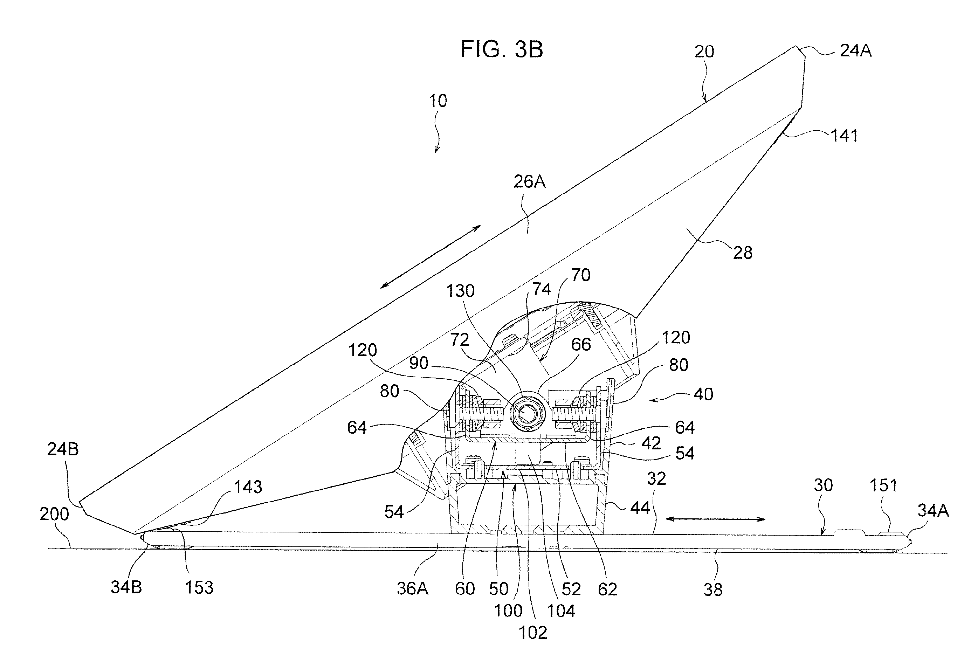

Further, when the first swinging member 60 is positioned at the neutral position in the swinging range thereof and the second swinging members 70 are positioned at another swung positions that the second swinging members 70 are swung to in the other direction (the arrow ML2 direction), as illustrated in Fig. 3, the other lateral edge portions 24B, 34B are made to approach one another. Further, at this time, the one lateral edge portions 24A, 34A are moved away from one another. In this usage mode of the electronic device 10, the stand 30 is disposed horizontally, and a rear surface portion 38 of this stand 30 is the setting portion onto the setting surface 200. Further, in this case, the other lateral edge portions 24B, 34B are positioned at the near side of the user, and the one lateral edge portions 24A, 34A are positioned at the far side from the user.

In the present embodiment, this usage mode of the electronic device 10 is called the touch style. This touch style is an example of the second usage mode of the electronic device.

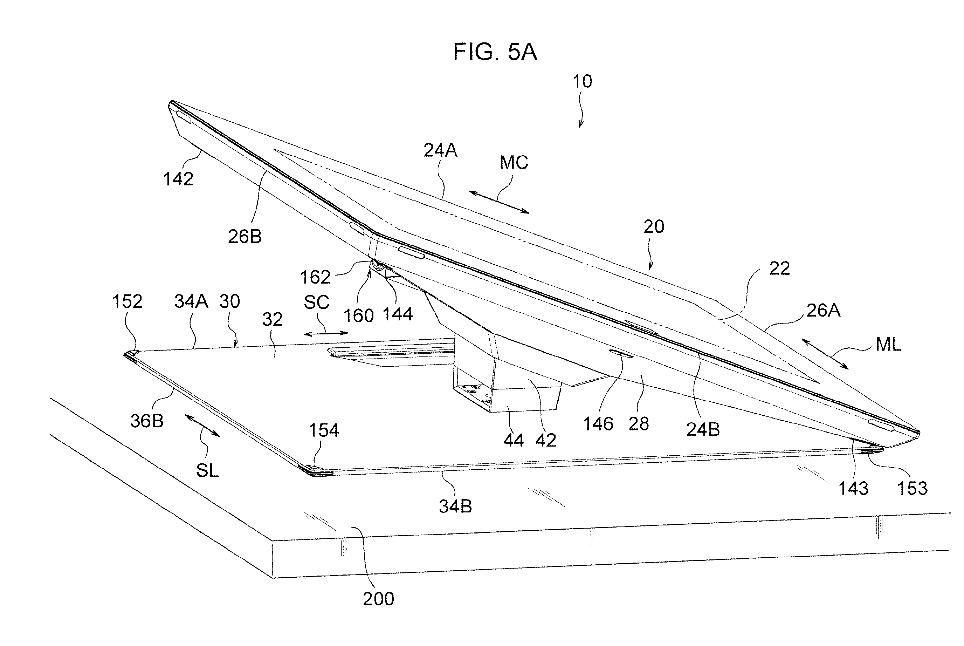

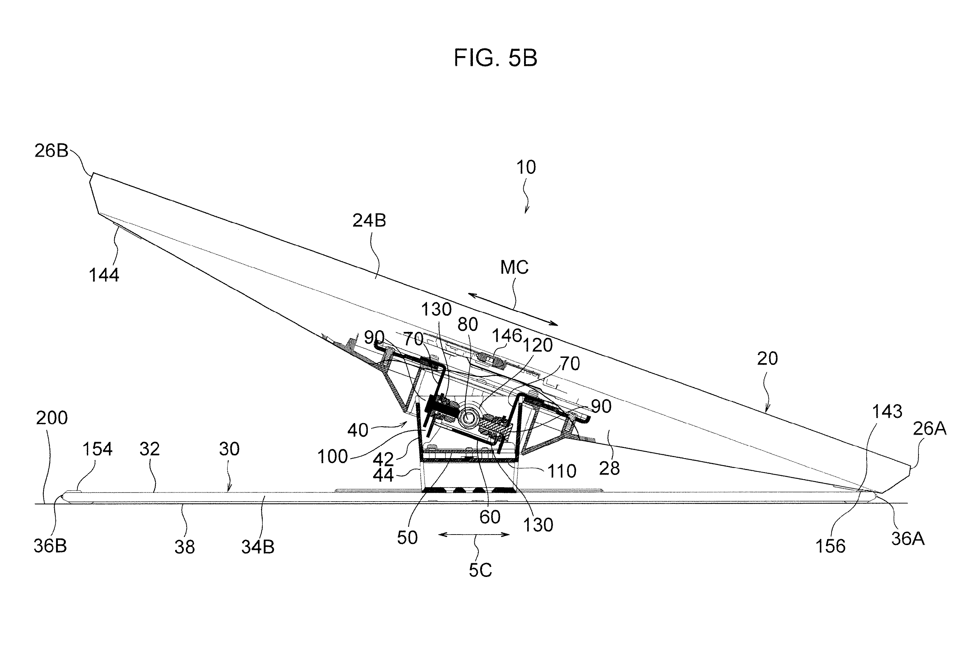

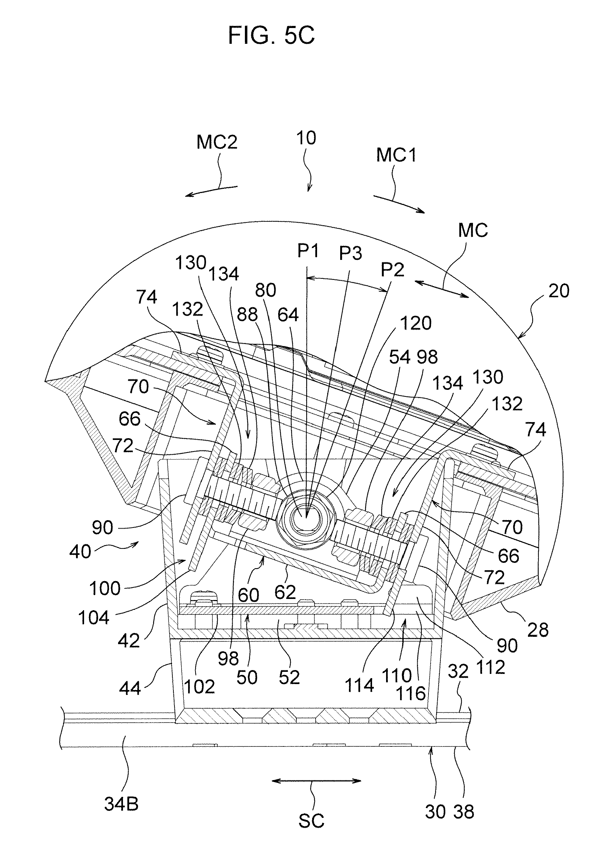

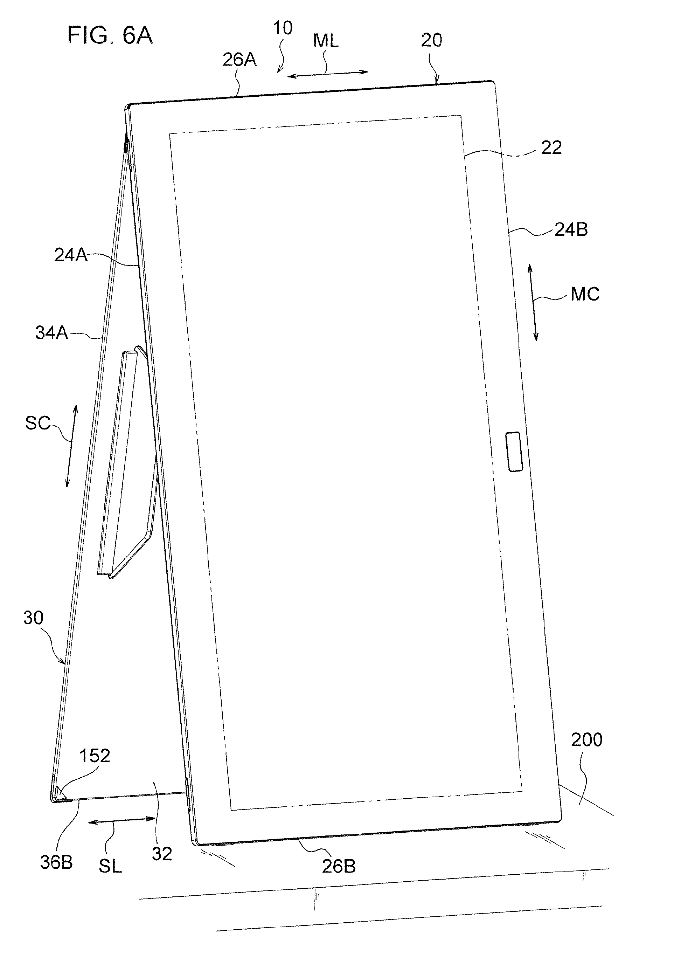

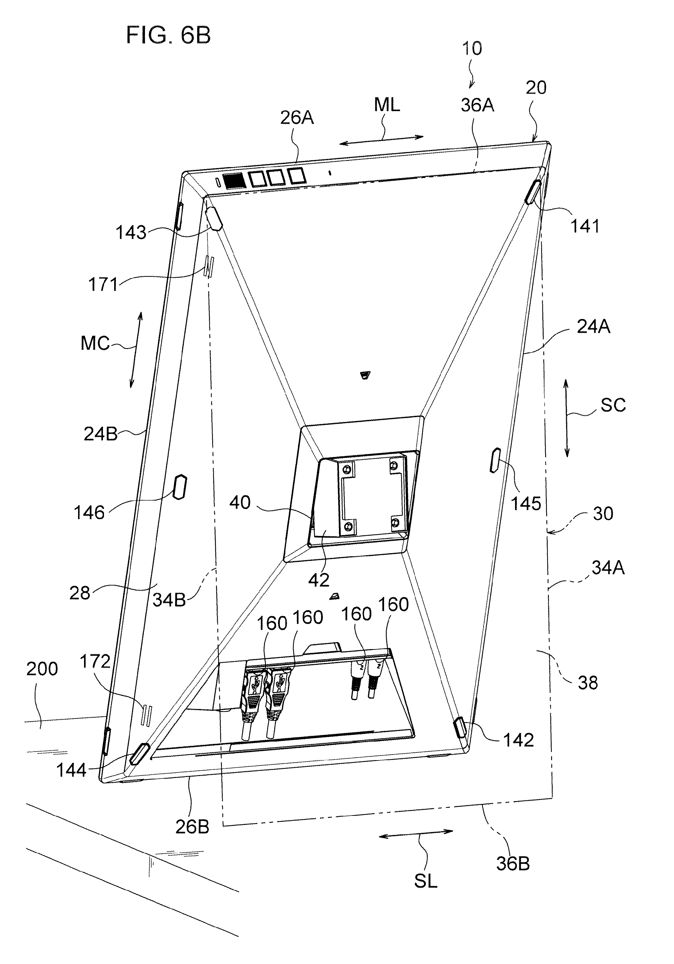

Moreover, as illustrated in Fig. 5 and Fig. 9, when the first swinging member 60 is positioned at a swung position that the swinging member 60 is swung to in one direction (the arrow MC1 direction) and the second swinging members 70 are positioned at the neutral positions in the swinging range thereof, the one vertical edge portions 26A, 36A are made to approach one another. Further, at this time, the other vertical edge portions 26B, 36B are moved away from one another. In this usage mode of the electronic device 10, as illustrated in Fig. 6, the one vertical edge portions 26A, 36A are positioned at the vertical direction upper side, and the other vertical edge portions 26B, 36B are positioned at the vertical direction lower side. Further, the other vertical edge portions 26B, 36B are the setting portions onto the setting surface 200.

In the present embodiment, this usage mode of the electronic device 10 is called the multiviewer style. This multiviewer style is an example of the third usage mode of the electronic device.

Further, as illustrated in Fig. 4 and Fig. 8, when the first swinging member 60 and the second swinging members 70 are respectively positioned at neutral positions in the swinging ranges thereof, the electronic device main body portion 20 and the stand 30 are disposed so as to face one another. In this usage mode of the electronic device 10, the stand 30 is disposed horizontally, and the rear surface portion 38 of this stand 30 is the setting portion onto the setting surface 200.

In the present embodiment, this usage mode of the electronic device 10 is called the flat style. This flat style is an example of the fourth usage mode of the electronic device. In this way, the electronic device 10 can be set in plural usage modes.

Further, an unillustrated sensor such as an angle sensor or the like for example, is provided at the above-described electronic device main body portion 20. Further, even in cases in which this electronic device 10 is changed to plural usage modes as described above, the display screen of the screen display portion 22 is rotated on the basis of outputted signals from the sensor so that the up-down direction of the display screen of the screen display portion 22 coincides with the vertical direction.

Note that, as described above, the first stopper 100 is provided at the hinge 40 of this electronic device 10. Accordingly, as illustrated in Fig. 4, when the electronic device 10 is set in the flat style, even if an attempt is made to rotate the electronic device main body portion 20 or the stand 30 such that the other vertical edge portions 26B, 36B are made to approach one another, this rotation is restricted by the first stopper 100.

Namely, due to the abutting portion 104 illustrated in Fig. 7A being made to abut the abutted portion 102, swinging of the first swinging member 60 in the other direction (the arrow MC2 direction) from the neutral position in the swinging range thereof is restricted. Further, due thereto, rotating of the electronic device main body portion 20 or the stand 30 such that the other vertical edge portions 26B, 36B, that are illustrated in Fig. 4, are made to approach one another is restricted.

Further, as described above, the second stopper 110 is provided at the hinge 40 of this electronic device 10. Accordingly, even if an attempt is made to directly change the electronic device 10 from the state in which it is set in the standard viewer style or the touch style (see Fig. 1 through Fig. 3) to the multiviewer style, this change is restricted by the second stopper 110.

Namely, when the second swinging members 70 are positioned at the one swung positions at the arrow ML1 side that is illustrated in Fig. 7 or at the other swung positions at the arrow ML2 side, swinging of the first swinging member 60 in the one direction (the arrow MC1 direction) is restricted due to the interference portion 114 being made to interfere with the guide portion 112. Further, due thereto, rotating of the electronic device main body portion 20 or the stand 30 such that the one vertical edge portions 26A, 36A, that are illustrated in Fig. 1 through Fig. 3, are made to approach one another is restricted. Accordingly, directly changing the electronic device 10 from the standard viewer style or the touch style to the multiviewer style is restricted.

Moreover, as illustrated in Fig. 5, when this electronic device 10 is set in the multiviewer style, even if an attempt is made to rotate the electronic device main body portion 20 or the stand 30 around the second rotating shafts 90, this rotation is restricted by the second stopper 110.

Namely, when the electronic device 10 is set in the multiviewer style and the first swinging member 60 is positioned at the swung position that the first swinging member 60 is swung to in the one direction (the arrow MC1 direction), the above-described interference portion 114 is disposed between the pair of bent pieces 112A, 112B (see Fig. 9A). Further, when the second swinging members 70 are swung in this state in which the interference portion 114 is disposed between the pair of bent pieces 112A, 112B, the interference portion 114 interferes with one or the other of the pair of bent pieces 112A, 112B.

In this way, the positions and the shapes and the like of the interference portion 114 and the pair of bent pieces 112A, 112B are set such that the interference portion 114 and the pair of bent pieces 112A, 112B interfere with one another as described above. Accordingly, when the electronic device 10 is set in the multiviewer style, even if an attempt is made to rotate the electronic device main body portion 20 or the stand 30 around the second rotating shafts 90, the interference portion 114 interferes with one or the other of the pair of bent pieces 112A, 112B. Further, due thereto, swinging of the second swinging members 70 is restricted.

Further, as illustrated in Fig. 7 through Fig. 9, first draw-in mechanisms 120 are provided at the above-described first rotating shafts 80. On the other hand, as illustrated in Fig. 9, second draw-in mechanisms 130 are provided at the second rotating shafts 90. In Fig. 7 and Fig. 8, for ease of understanding, there is a state in which the second draw-in mechanisms 130 are omitted.

The first draw-in mechanism 120 has a cam plate 122 and a spring plate 124. This cam plate 122 and spring plate 124 are, in a state of being overlapped on one another, interposed between the supporting wall portion 64 and the nut 88, and are coaxially installed on the shaft portion 82 of the first rotating shaft 80. Plural cam projections that are not illustrated are formed at the cam plate 122. By varying the relative positions of these plural cam projections and the spring plate 124 in accordance with the angle of swinging of the first swinging member 60, these first draw-in mechanisms 120 exhibit the following drawing-in function.

Namely, as illustrated in Fig. 4C and Fig. 5C, the neutral position in the swinging range of the first swinging member 60 is P1. Further, the swung position to which the first swinging member 60 is swung in one direction (the arrow MC1 direction) is P2, and an intermediate position between the neutral position P1 and the swung position P2 is P3. Further, while the first swinging member 60 is positioned between the intermediate position P3 and the swung position P2, the first swinging member 60 is urged by the first draw-in mechanisms 120 so as to be moved toward the swung position P2. Further, while the first swinging member 60 is positioned between the intermediate position P3 and the neutral position P1, the first swinging member 60 is urged by the first draw-in mechanisms 120 so as to be moved toward the neutral position P1. Moreover, these first draw-in mechanisms 120 also have a click function that holds the first swinging member 60 at the neutral position P1.

A mechanism that is similar to the first draw-in mechanism 120 is used at the second draw-in mechanism 130. This second draw-in mechanism 130 has a cam plate 132 and a spring plate 134. These second draw-in mechanisms 130 exhibit the following drawing-in function.

Namely, as illustrated in Fig 1D and Fig. 3C, the neutral positions in the swinging range of the second swinging members 70 are S1. Further, one swung positions to which the second swinging members 70 are swung in one direction (the arrow ML1 direction) are S2, and intermediate positions between the neutral positions S1 and the one swung positions S2 are S3. Further, while the second swinging members 70 are positioned between the intermediate positions S3 and the one swung positions S2, the second swinging members 70 are urged by the second draw-in mechanisms 130 so as to be moved toward the one swung positions S2. Further, while the second swinging members 70 are positioned between the intermediate positions S3 and the neutral positions S1, the second swinging members 70 are urged by the second draw-in mechanisms 130 so as to be moved toward the neutral positions S1.

Similarly, another swung positions to which the second swinging members 70 are swung in the other direction (the arrow ML2 direction) are S4, and intermediate positions between the neutral positions S1 and the other swung positions S4 are S5. Further, while the second swinging members 70 are positioned between the intermediate positions S5 and the other swung positions S4, the second swinging members 70 are urged by the second draw-in mechanisms 130 so as to be moved toward the other swung positions S4. Further, while the second swinging members 70 are positioned between the intermediate positions S5 and the neutral positions S1, the second swinging members 70 are urged by the second draw-in mechanisms 130 so as to be moved toward the neutral positions S1. Further, these second draw-in mechanisms 130 also have a click function that holds the second swinging members 70 at the neutral positions S1.

The first draw-in mechanisms 120 and the second draw-in mechanisms 130 that respectively have this click function are examples of the first draw-in mechanisms and the second draw-in mechanisms, and are also examples of the click mechanisms.

Note that, at the first draw-in mechanism 120, due to the screwed-together amount of the nut 88 and the screw portion 86, that are illustrated in Fig. 7 and Fig. 8, being adjusted, the pressing force between the cam plate 122 and the spring plate 124 is changed, and due thereto, the draw-in torque is increased and decreased. Similarly, at the second draw-in mechanism 130, due to the screwed-together amount of the nut 98 and the screw portion 96, that are illustrated in Fig. 9, being adjusted, the pressing force between the cam plate 132 and the spring plate 134 is changed, and the draw-in torque is increased and decreased.

Further, as illustrated in Fig. 1 through Fig. 6, cushioning materials 141 through 144, that are rubber materials or the like for example, are provided respectively at the four corner portions of the rear surface portion 28 of the electronic device main body portion 20.

Namely, the cushioning material 141 is provided at the end portion that is at the one lateral edge portion 24A side and the one vertical edge portion 26A side of the rear surface portion 28, and the cushioning material 142 is provided at the end portion that is at the one lateral edge portion 24A side and the other vertical edge portion 26B side of the rear surface portion 28. Further, the cushioning material 143 is provided at the end portion at the other lateral edge portion 24B side and the one vertical edge portion 26A side of the rear surface portion 28, and the cushioning material 144 is provided at the end portion at the other lateral edge portion 24B side and the other vertical edge portion 26B side of the rear surface portion 28.

Similarly, cushioning materials 151 through 154, that are rubber materials or the like for example, are provided respectively at the four corner portions of a facing surface 32, that faces the rear surface portion 28 of the electronic device main body portion 20, at the stand 30.

Namely, the cushioning material 151 is provided at the end portion at the one lateral edge portion 34A side and the one vertical edge portion 36A side of the facing surface 32, and the cushioning material 152 is provided at the end portion at the one lateral edge portion 34A side and the other vertical edge portion 36B side of the facing surface 32. Further, the cushioning material 153 is provided at the end portion at the other lateral edge portion 34B side and the one vertical edge portion 36A side of the facing surface 32, and the cushioning material 154 is provided at the end portion at the other lateral edge portion 34B side and the other vertical edge portion 36B side of the facing surface 32.

As illustrated in Fig. 1, the positions and the shapes and the like of the cushioning materials 141, 142 and the cushioning materials 151, 152 are set such that they are made to abut one another at the time when the electronic device 10 is set in the standard viewer style and the one lateral edge portions 24A, 34A are made to approach one another. Further, as illustrated in Fig. 3, the positions and the shapes and the like of the cushioning materials 143, 144 and the cushioning materials 153, 154 are set such that they are made to abut one another at the time when the electronic device 10 is set in the touch style and the other lateral edge portions 24B, 34B are made to approach one another. Moreover, the positions and the shapes and the like of the cushioning materials 141, 143 and the cushioning materials 151, 153 are set such that they are made to abut one another at the time when the electronic device 10 is set in the multiviewer style and the one vertical edge portions 26A, 36A are made to approach one another.

Note that the cushioning materials 141, 142 and the cushioning materials 151, 152 are examples of the cushioning materials that are provided at the end portions at the one lateral edge portion sides of the rear surface portion of the electronic device main body portion and the facing surface of the stand respectively. Further, the cushioning materials 143, 144 and the cushioning materials 153, 154 are examples of the cushioning materials that are provided at the end portions at the other lateral edge portion sides of the rear surface portion of the electronic device main body portion and the facing surface of the stand respectively. Further, the cushioning materials 141, 143 and the cushioning materials 151, 153 are examples of the cushioning materials that are provided at the end portions at the one vertical edge portion sides of the rear surface portion of the electronic device main body portion and the facing surface of the stand respectively.

Further, as illustrated in Fig. 6B, a cushioning material 145 is provided at the central portion of the end portion at the one lateral edge portion 24A side of the rear surface portion 28, and a cushioning material 146 is provided at the central portion of the end portion at the other lateral edge portion 24B side of the rear surface portion 28. The position and the shape and the like of the cushioning material 145 are set such that the cushioning material 145 is made to abut the end portion at the one lateral edge portion 34A side of the facing surface 32 at the time when the electronic device 10 is set in the standard viewer style and the one lateral edge portions 24A, 34A are made to approach one another as illustrated in Fig. 1. Similarly, the position and the shape and the like of the cushioning material 146 are set such that the cushioning material 146 is made to abut the end portion at the other lateral edge portion 34B side of the facing surface 32 at the time when the electronic device 10 is set in the touch style and the other lateral edge portions 24B, 34B are made to approach one another as illustrated in Fig. 3.

Further, as illustrated in Fig. 6B, plural connectors 160 are provided at the rear surface portion 28 of the electronic device main body portion 20 at positions that are offset toward the other vertical edge portion 26B side with respect to the hinge 40. These plural connectors 160 are, for example, for power supply, for external input, for external output, and the like. As illustrated in Fig. 1B, each of the connectors 160 has a connection portion that is connected to an external connector. This connection portion 162 has a connection terminal or a connection hole or the like. Further, at all of the respective connectors 160, the connection portion 162 is disposed so as to face toward the other vertical edge portion 26B side.

Moreover, as illustrated in Fig. 1B, a pair of speakers 171, 172 are provided at the rear surface portion 28 of the electronic device main body portion 20. The one speaker 171 is provided at a position that is offset toward the other lateral edge portion 24B side and the one vertical edge portion 26A side with respect to the hinge 40. The other speaker 172 is provided at a position that is offset toward the other lateral edge portion 24B side and the other vertical edge portion 26B side with respect to the hinge 40. Moreover, the above-described stand 30, that faces this pair of speakers 171, 172, is formed of a material that has high reflectivity with respect to the sound outputted from the pair of speakers 171, 172, e.g., a resin plate or an aluminum plate or the like.

The operation and effects of the present embodiment are described next.

As described in detail above, in the present embodiment, the electronic device 10 can be set in the standard viewer style, the touch style, the multiviewer style, and the flat style.

Further, in the standard viewer style of Fig. 1, the user can arbitrarily select and carry out both operation of an unillustrated keyboard and touch panel operation of the screen display portion 22. Further, in the touch style of Fig. 3, because the other lateral edge portion 24B at the electronic device main body portion 20 is lowered to a position that substantially contacts the top of a desk, the burden on the arms at the time when the user carries out touch panel operation can be reduced. Moreover, in the multiviewer style of Fig. 6, the user can use the screen display portion 22 in a state in which it is vertically long. In the flat style of Fig. 4, the user can use the display screen in a state in which it is set horizontally.

In this way, in the present embodiment, the one electronic device 10 can be used in the standard viewer style, the touch style, the multiviewer style and the flat style in accordance with the demands of the user.

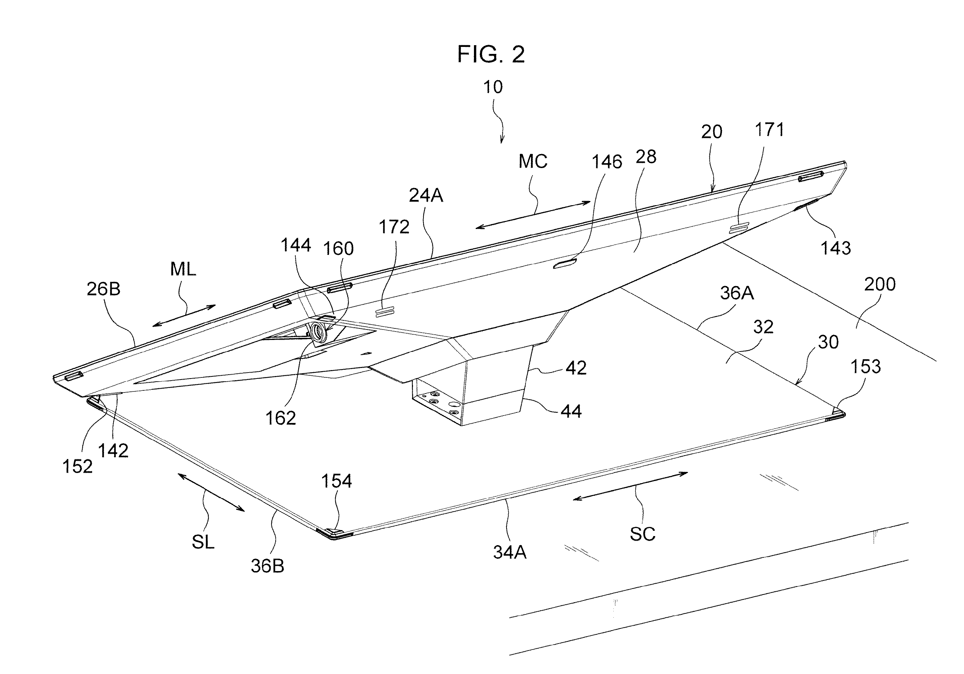

Further, the first stopper 100 that has the abutted portion 102 and the abutting portion 104 is provided at the hinge 40. Further, when the first swinging member 60 is positioned at the neutral position in the swinging range thereof, due to the abutting portion 104 being made to abut the abutted portion 102, swinging of the first swinging member 60 in the other direction, i.e., in the arrow MC2 direction, is restricted. Accordingly, when the electronic device 10 is in the flat style as illustrated in Fig. 1 and Fig. 2, even if an attempt is made to rotate the electronic device main body portion 20 or the stand 30 such that the other vertical edge portions 26B, 36B are made to approach one another, this rotation is restricted by the abutting of the abutted portion 102 and the abutting portion 104. Due thereto, the plural connectors 160, that are disposed at the other vertical edge portion 26B side of the rear surface portion 28 of the electronic device main body portion 20, and the external connectors or cables or the like that are connected thereto interfering with the stand 30 can be suppressed.

Moreover, the second stopper 110 that has the guide portion 112 and the interference portion 114 is provided at the hinge 40. Further, when the second swinging members 70 are positioned at positions away from the neutral positions in the swinging range thereof, the interference portion 114 interferes with the guide portion 112, and swinging of the first swinging member 60 in the arrow MC1 direction from the neutral position in the swinging range thereof is restricted. Accordingly, even if an attempt is made to directly change the electronic device 10 from a state of being set in the standard viewer style or the touch style (see Fig. 1 through Fig. 3) to the multiviewer style, this change is restricted by the interference of the guide portion 112 and the interference portion 114.

On the other hand, when the second swinging members 70 are positioned at the neutral positions in the swinging range thereof, due to the interference portion 114 being guided by the guide portion 112, swinging of the first swinging member 60 in the arrow MC1 direction from the neutral position in the swinging range thereof is permitted. Accordingly, even if the electronic device 10 is in a state of being set in the standard viewer style or the touch style, if the electronic device 10 is temporarily set in the flat style as illustrated in Fig. 4, this electronic device 10 can be changed to the multiviewer style. Due thereto, the user can be made to change the electronic device 10 to the multiviewer style in the correct order.

Further, as illustrated in Fig. 5 and Fig. 6, when the electronic device 10 is set in the multi viewer style, even if an attempt is made to rotate the electronic device main body portion 20 or the stand 30 around the second rotating shafts 90, this rotation is restricted by the second stopper 110. Namely, at this time, the interference portion 114 is made to interfere with either of the pair of the bent pieces 112A, 112B. Accordingly, when the electronic device 10 is set in the multiviewer style, the electronic device main body portion 20 or the stand 30 inadvertently rotating around the second rotating shafts 90 can be suppressed.

Further, as illustrated in Fig. 5 and Fig. 6, when the electronic device 10 is set in the multiviewer style, due to the first draw-in mechanisms 120, the first swinging member 60 is urged toward the one direction (the arrow MC1 direction) and the one vertical edge portions 26A, 36A are set in a state of having been made to approach one another. Due thereto, the electronic device 10 can be stably maintained in the multiviewer style.

Similarly, as illustrated in Fig. 1, when the electronic device 10 is set in the standard viewer style, due to the second drawn-in mechanisms 130, the second swinging members 70 are urged in the one direction (the arrow ML1 direction), and the one lateral edge portions 24A, 34A are set in a state of having been made to approach one another. Due thereto, the electronic device 10 can be stably maintained in the standard viewer style.

Further, as illustrated in Fig. 3, when the electronic device 10 is set in the touch style, due to the second draw-in mechanisms 130, the second swinging members 70 are urged toward the other direction (the arrow ML2 direction), and the other lateral edge portions 24B, 24B are set in a state of having been made to approach one another. Due thereto, the electronic device 10 can be stably maintained in the touch style.

Further, as illustrated in Fig. 4, when the first swinging member 60 and the second swinging members 70 are positioned at the neutral positions in the swinging ranges thereof, they are respectively maintained at the neutral positions due to the click functions of the first draw-in mechanisms 120 and the second draw-in mechanisms 130. Due thereto, the electronic device 10 can be stably maintained in the flat style.

Further, the cushioning materials 141, 142 and the cushioning materials 151, 152 are respectively provided at the end portions at the one lateral edge portion 24A, 34A sides of the rear surface portion 28 of the electronic device main body portion 20 and the facing surface 32 of the stand 30, respectively. As illustrated in Fig. 1, these cushioning materials 141, 142 and cushioning materials 151, 152 are made to abut one another when the electronic device 10 is set in the standard viewer style and the one lateral edge portions 24A, 34A are made to approach one another. Accordingly, the end portions at the one lateral edge portion 24A, 34A sides of the rear surface portion 28 of the electronic device main body portion 20 and the facing surface 32 of the stand 30 respectively can be made to fit closely to one another via the cushioning materials 141, 142 and the cushioning materials 151, 152. Due thereto, when the electronic device 10 is set in the standard viewer style, even if the region at the one lateral edge portion 24A, 34A side of the screen display portion 22 is touched by the user, flexure of the electronic device main body portion 20 can be suppressed.

Further, the cushioning material 145 is provided at the central portion of the end portion at the one lateral edge portion 24A side of the rear surface portion 28. As illustrated in Fig. 1, when the electronic device 10 is set in the standard viewer style and the one lateral edge portions 24A, 34A are made to approach one another, this cushioning material 145 is made to abut the end portion at the one lateral edge portion 34A side of the facing surface 32. Due thereto, flexure of the electronic device main body portion 20 can be suppressed more effectively.

Similarly, the cushioning materials 143, 144 and the cushioning materials 153, 154 are respectively provided at the end portions at the other lateral edge portion 24B, 34B sides of the rear surface portion 28 of the electronic device main body portion 20 and the facing surface 32 of the stand 30, respectively. As illustrated in Fig. 3, these cushioning materials 143, 144 and cushioning materials 153, 154 are made to abut one another when the electronic device 10 is set in the touch style and the other lateral edge portions 24B, 34B are made to approach one another. Accordingly, the end portions at the other lateral edge portion 24B, 34B sides of the rear surface portion 28 of the electronic device main body portion 20 and the facing surface 32 of the stand 30 respectively can be fit closely to one another via the cushioning materials 143, 144 and the cushioning materials 153, 154. Due thereto, when the electronic device 10 is set in the touch style, even if the region at the other lateral edge portion 24B, 34B side of the screen display portion 22 is touched by the user, flexure of the electronic device main body portion 20 can be suppressed.

Further, the cushioning material 146 is provided at the central portion of the end portion at the other lateral edge portion 24B side of the rear surface portion 28. As illustrated in Fig. 3, when the electronic device 10 is set in the touch style and the other lateral edge portions 24B, 34B are made to approach one another, this cushioning material 146 is made to abut the end portion at the other lateral edge portion 34B side of the facing surface 32. Due thereto, flexure of the electronic device main body portion 20 can be suppressed more effectively.

Further, the cushioning materials 141, 143 and the cushioning materials 151, 153 are respectively provided at the end portions at the one vertical edge portion 26A, 36A sides of the rear surface portion 28 of the electronic device main body portion 20 and the facing surface 32 of the stand 30, respectively. As illustrated in Fig. 6, these cushioning materials 141, 143 and cushioning materials 151, 153 are made to abut one another when the electronic device 10 is set in the multiviewer style and the one vertical edge portions 26A, 36A are made to approach one another. Accordingly, the end portions at the one vertical edge portion 26A, 36A sides of the rear surface portion 28 of the electronic device main body portion 20 and the facing surface 32 of the stand 30 respectively can be fit closely to one another via the cushioning materials 141, 143 and the cushioning materials 151, 153. Due thereto, when the electronic device 10 is set in the multiviewer style, even if the region at the one vertical edge portion 26A, 36A side of the screen display portion 22 is touched by the user, flexure of the electronic device main body portion 20 can be suppressed.

Further, the plural connectors 160 are provided at a position that is offset toward the other vertical edge portion 26B side with respect to the hinge 40. Accordingly, as illustrated in Fig. 6, in a case in which the electronic device 10 is set in the multiviewer style, the plural connectors 160, and the external connectors and cables and the like that are connected thereto, are positioned at the lower portion of the electronic device 10. Due thereto, the cables and the like that are connected to these plural connectors 160 getting in the way of the user can be suppressed.

Further, at all of the plural connectors 160, the connection portions 162 with external connectors are disposed so as to face toward the other vertical edge portion 26B side. Accordingly, the external connectors and cables and the like that are connected to the plural connectors 160 can be led-out toward the other vertical edge portion 26B side, i.e., the side at which the gap between the electronic device main body portion 20 and the stand 30 is opened wide. Due thereto, laying of the cables and the like that are connected to the plural connectors 160 is easy.

Further, the pair of speakers 171, 172 are provided at the rear surface portion 28 of the electronic device main body portion 20. Accordingly, when the electronic device 10 is set in the standard viewer style as in Fig. 1, the sound that is emitted from the pair of speakers 171, 172 can be reflected by the rear surface portion 28 of the electronic device 10, the facing surface 32 of the stand 30, and the setting surface 200. Further, the sound can be emitted in the lateral direction of the electronic device main body portion 20 while being reflected in this way.

In particular, because this pair of speakers 171, 172 are provided at positions that are offset toward the other lateral edge portion 24B side with respect to the hinge 40, the distance between this pair of speakers 171, 172 and the stand 30 can be ensured. Due thereto, the sound that is emitted from the pair of speakers 171, 172 can be amplified more effectively.

Further, the one speaker 171 is provided at a position that is offset toward the other lateral edge portion 24B side and the one vertical edge portion 26A side with respect to the hinge 40. The other speaker 172 is provided at a position that is offset toward the other lateral edge portion 24B side and the other vertical edge portion 26B side with respect to the hinge 40. Accordingly, because this pair of speakers 171, 172 are disposed to be nearer to the vertical edge portions 26A, 26B at the both sides respectively, the sound that is emitted from this pair of speakers 171, 172 can be emitted in the lateral direction of the electronic device main body portion 20 while muffling of this sound is suppressed.

Further, as illustrated in Fig. 7 through Fig. 9, the first rotating shafts 80 and the second rotating shafts 90 are disposed on the same plane. Accordingly, the height of the hinge 40 can be made to be small. Due thereto, the dimension in the depthwise direction of the electronic device 10, i.e., the dimension in the thickness direction that includes the electronic device main body portion 20, the hinge 40 and the stand 30, can be made to be small.

Further, because the first rotating shafts 80 and the second rotating shafts 90 are disposed in the same plane, it is easy to turn the respective nuts 88, 98 by a tool. Therefore, adjusting of the draw-in torque at the first draw-in mechanisms 120 and the second draw-in mechanisms 130 can be carried out easily.

Modified examples of the present embodiment are described next.

In the above-described embodiment, as illustrated in Fig. 1 through Fig. 6, the cushioning materials 141, 142 and the cushioning materials 151, 152 are respectively provided at the end portions at the one lateral edge portion 24A, 34A sides of the rear surface portion 28 of the electronic device main body portion 20 and the facing surface 32 of the stand 30 respectively. However, either one of the cushioning materials among these cushioning materials 141, 142 and cushioning materials 151, 152 may be omitted.

Similarly, the cushioning materials 143, 144 and the cushioning materials 153, 154 are respectively provided at the end portions at the other lateral edge portion 24B, 34B sides of the rear surface portion 28 and the facing surface 32 respectively. However, either one of the cushioning materials among these cushioning materials 143, 144 and cushioning materials 153, 154 may be omitted.

Further, the cushioning materials 141, 143 and the cushioning materials 151, 153 are respectively provided at the end portions at the one vertical edge portion 26A, 36A sides of the rear surface portion 28 and the facing surface 32 respectively. However, either one of the cushioning materials among these cushioning materials 141, 143 and cushioning materials 151, 153 may be omitted.

Further, although the cushioning material 145 is provided at the central portion of the end portion at the one lateral edge portion 24A side of the rear surface portion 28, the cushioning material 145 may be provided at the central portion of the end portion at the one lateral edge portion 34A side of the facing surface 32. Further, the cushioning material 145 may be provided respectively at the central portion of the end portion at the one lateral edge portion 24A side of the rear surface portion 28, and the central portion of the end portion at the one lateral edge portion 34A side of the facing surface 32.

Similarly, although the cushioning material 146 is provided at the central portion of the end portion at the other lateral edge portion 24B side of the rear surface portion 28, the cushioning material 146 may be provided at the central portion of the end portion at the other lateral edge portion 34B side of the facing surface 32. Further, the cushioning material 146 may be provided respectively at the central portion of the end portion at the other lateral edge portion 24B side of the rear surface portion 28, and the central portion of the end portion at the other lateral edge portion 34B side of the facing surface 32.

Further, in addition to the draw-in function of urging the first swinging member 60, the first draw-in mechanisms 120 have the click function of maintaining the first swinging member 60 at the neutral position in the swinging range thereof. Similarly, in addition to the draw-in function of urging the second swinging members 70, the second draw-in mechanisms 130 have the click function of maintaining the second swinging members 70 at the neutral positions in the swinging range thereof. However, the first draw-in mechanisms 120 and the second draw-in mechanisms 130 may have only the draw-in functions, and the hinge 40 may, separately from these first draw-in mechanisms 120 and second draw-in mechanisms 130, have click mechanisms that have click functions.

Further, although the base member 50 is fixed to the stand 30 via the cover member 42 and the bracket 44, the base member 50 may be fixed directly to the stand 30. Further, the base member 50 may be formed integrally with the stand 30.

Further, although the second swinging members 70 are made to be bodies that are separate from the electronic device main body portion 20, for example, the second swinging members 70 may be formed integrally with the back cover that forms the rear surface portion 28 of the electronic device main body portion 20.

Further, the electronic device 10 may be structured so as to be able to be set in at least one of the standard viewer style, the touch style, the multiviewer style, and the flat style.

Although an aspect of the technique disclosed in the present application has been described above, the technique disclosed in the present application is not limited to the above, and, other than the above, may of course be implemented by being modified in various ways within a scope that does not deviate from the gist thereof.

## Claims

1. A hinge comprising:
a base member;
a first swinging member that is swingably supported at the base member via first rotating shafts;
second swinging members that are swingably supported at the first swinging member via second rotating shafts whose axial directions intersect axial directions of the first rotating shafts;
a first stopper having an abutted portion that is provided at the base member, and an abutting portion that is provided at the first swinging member, and that permits swinging of the first swinging member in one direction from a neutral position in a swinging range of the first swinging member, and that, by being made to abut the abutted portions, restricts swinging of the first swinging member in another direction from the neutral position in the swinging range of the first swinging member; and
a second stopper that, when the second swinging members are positioned at neutral positions in a swinging range of the second swinging members, permits swinging of the first swinging member in one direction from the neutral position in the swinging range of the first swinging member.

2. The hinge of Claim 1, wherein
the second stopper has a guide portion that is provided at the base member, and an interference portion that is provided at the second swinging member, and
when the second swinging members are positioned at positions away from the neutral positions in the swinging range of the second swinging members, the interference portion, by being made to interfere with the guide portion, restricts swinging of the first swinging member in one direction from the neutral position in the swinging range of the first swinging member.

3. The hinge of Claim 2, wherein the interference portion restricts swinging of the second swinging members by being made to interfere with the guide portion when the second swinging members are positioned at the neutral positions in the swinging range of the second swinging members and the first swinging member is positioned at a swung position to which the first swinging member is swung in one direction.

4. The hinge of any one of Claim 1 through Claim 3, wherein the first rotating shafts and the second rotating shafts are disposed in a same plane.

5. The hinge of any one of Claim 1 through Claim 4, wherein
provided at the first rotating shafts are first draw-in mechanisms that, while the first swinging member is positioned between an intermediate position, that is between the neutral position in the swinging range of the first swinging member and a swung position to which the first swinging member is swung in one direction, and the swung position, urge the first swinging member such that the first swinging member is moved toward the swung position, and
provided at the second rotating shafts are second draw-in mechanisms that, while the second swinging members are positioned between intermediate positions, that are between the neutral positions in the swinging range of the second swinging members and one swung positions to which the second swinging members are swung in one direction, and the one swung positions, urge the second swinging members such that the second swinging members are moved toward the one swung positions, and, while the second swinging members are positioned between intermediate positions, that are between the neutral positions in the swinging range of the second swinging members and other swung positions to which the second swinging members are swung in another direction, and the other swung positions, urge the second swinging members such that the second swinging members are moved toward the other swung positions.

6. An electronic device comprising:
an electronic device main body portion having a screen display portion at a front surface portion;
a stand that is provided at a rear surface side of the electronic device main body portion, and that has a pair of lateral edge portions extending along lateral edge portions of the electronic device main body portion, and a pair of vertical edge portions that connect both ends of the pair of lateral edge portions; and
the hinge of any one of Claim 1 through Claim 5,
wherein the base member is fixed to the stand,
the second swinging members are fixed to a rear surface portion of the electronic device main body portion,
the first rotating shafts are disposed with axial directions thereof being a direction in which the vertical edge portions of the stand extend,
the second rotating shafts are disposed with axial directions thereof being a direction in which the lateral edge portions of the electronic device main body portion extend, and
the electronic device is able to be set in at least one mode among
a first usage mode in which, when the first swinging member is positioned at the neutral position in the swinging range of the first swinging member and the second swinging members are positioned at one swung positions to which the second swinging members are swung in one direction, one lateral edge portions of the electronic device main body portion and the stand respectively are made to approach one another, and other lateral edge portions of the electronic device main body portion and the stand respectively are moved apart from one another and are setting portions onto a setting surface,
a second usage mode in which, when the first swinging member is positioned at the neutral position in the swinging range of the first swinging member and the second swinging members are positioned at another swung positions to which the second swinging members are swung in another direction, the other lateral edge portions of the electronic device main body portion and the stand respectively are made to approach one another, and the one lateral edge portions of the electronic device main body portion and the stand respectively are moved apart from one another, and a rear surface portion of the stand is a setting portion onto a setting surface, and
a third usage mode in which, when the first swinging member is positioned at a swung position to which the first swinging member is swung in one direction and the second swinging members are positioned at the neutral positions in the swinging range of the second swinging members, one vertical edge portions of the electronic device main body portion and the stand respectively are made to approach one another, and other vertical edge portions of the electronic device main body portion and the stand respectively are moved apart from one another and are setting portions onto a setting surface.

7. The electronic device of Claim 6, wherein the electronic device can be set in the first usage mode, the second usage mode and the third usage mode.

8. The electronic device of Claim 6 or Claim 7, wherein a connector is provided at the rear surface portion of the electronic device main body portion, at a position that is offset toward the other vertical edge portion side with respect to the hinge.

9. The electronic device of Claim 8, wherein the connector is disposed such that a connecting portion with an external connector faces toward the other vertical edge portion side.

10. The electronic device of any one of Claim 6 through Claim 9, wherein a speaker is provided at the rear surface portion of the electronic device main body portion, at a position that is offset toward the other lateral edge portion side with respect to the hinge.

11. The electronic device of Claim 10 comprising a pair of the speakers, wherein
one of the pair of speakers is provided at a position that is offset toward the other lateral edge portion side and the one vertical edge portion side with respect to the hinge, and
another of the pair of speakers is provided at a position that is offset toward the other lateral edge portion side and the other vertical edge portion side with respect to the hinge.

12. The electronic device of any one of Claim 6 through Claim 11, wherein a cushioning material is provided at at least one end portion among respective pairs of end portions that are end portions at the one lateral edge portion sides of the rear surface portion of the electronic device main body portion and a facing surface, that faces the rear surface portion, of the stand respectively, and end portions at the other lateral edge portion sides of the rear surface portion of the electronic device main body portion and the facing surface of the stand respectively, and end portions at the one vertical edge portion sides of the rear surface portion of the electronic device main body portion and the facing surface of the stand respectively.

13. The electronic device of any one of Claim 6 through Claim 12, wherein
the hinge has a click mechanism that maintains the first swinging member and the second swinging members at the neutral positions in the swinging ranges thereof, and
the electronic device can be set in a fourth usage mode in which, when the first swinging member and the second swinging members are maintained at the neutral positions in the swinging ranges thereof by the click mechanism, the electronic device main body portion and the stand are disposed so as to face one another, and the rear surface portion of the stand is a setting portion onto a setting surface.
